# EUROPEAN PATENT SPECIFICATION

(11) **EP 1 071 575 B1**
(45) Date of publication and mention of the grant of the patent: **05.11.2003**
(21) Application number: 99914675.6
(22) Date of filing: 06.04.1999
(51) Int. Cl.: B60N 2/30

(54) **A Seat Assembly**
Sitzeinrichtung
Ensemble siège

(30) Priority: 14.04.1998 GB 9807667
(43) Date of publication of application: 31.01.2001
(73) Proprietor: Land Rover Group Limited, Lighthorne, Warwick CV35 0RG (GB)
(72) Inventor: HICKSON, Alex John, Ipswich, Suffolk IP4 3LH (GB); BEADLE, David Edward, Leamington Spa, Warwickshire CV33 0GB (GB)
(74) Representative: Farrow, Robert Michael
(86) International application number: GB9901051
(87) International publication number: WO99052736

(56) References cited:
- EP-A- 0 704 340
- WO-A-96/17743
- DE-A- 4 237 258
- FR-A- 745 202
- GB-A- 2 316 607

## Description

The present invention relates to a seat and more particularly to a seat assembly for so-called third row seating within a motor vehicle (see, for example, FR-A-745 202, corresponding to the preamble of claim 1).

Inherently, within a motor vehicle there is a requirement to provide seating for passengers. However, typically, more seating is generally provided than required for an average number of occupants for the vehicle in order to ensure that such seating is available for occasional use. Typically, a motor vehicle includes front and rear seats. However, and of importance with regard to the present invention, some larger vehicles and in particular off-road or sports utility vehicles sometimes include third row or auxiliary seating for occasional passenger occupation.

Provision of third row seating presents a dilemma to a vehicle designer between a reduction in vehicle luggage carrying capacity and the desire to have such seating for only occasional use. Thus, so-called 'jump seats' or cantilevered bench arrangements suspended from a vehicle side wall as illustrated in the above-mentioned FR-A-745202 (Kellner) are known. However, it will be appreciated that, third row seating will typically be accommodated in the rear luggage space of a vehicle and such third row seating can significantly add to vehicle unladen weight. Thus, the intrusive nature of seats as shown in FR-A-745202 (Kellner) means they are not ideal as third row seating.

Motor vehicle manufacturers have previously attempted to provide third row seating through a variety of approaches. Thus, some manufacturers provide third row seating assemblies which can be detached and so removed from the vehicle when not required. Alternatively, some manufacturers have provided third row seating which can be deployed from a stowed position, either from the roof panel or the luggage space floor or the vehicle's side panels. Unfortunately, particularly with stowable third row seating, significant problems can be presented by the intrusion of a wheel arch irregularity within the vehicle luggage space. It will also be understood that, although stowable, any third row seating must be appropriately secured within the vehicle for safety purposes, particularly when deployed. Thus, such requirements for only occasional use within the vehicle, can render so-called third row seating a considerable luxury.

With three-row seating there is a conflict between providing an acceptable stowed position and a desired erected or deployed position. Preferably, the stowed position should allow easy accommodation within a vehicle without the inconvenience of loose parts. The deployed position should provide safe, accessible and comfortable seating for a passenger of the vehicle. This conflict must be resolved without increased vehicle installation difficulty or complex deployment operations. Thus, care must be taken with regard to the components chosen and the deployment regime used.

It is an object of the present invention to provide a seat assembly for use within a motor vehicle which is particularly suitable for use as so-called third row seating.

In accordance with the present invention as defined in claim 1 there is provided a seat assembly for a motor vehicle, the assembly comprising a seat secured upon mounting means comprising seat swivel means and panel swivel means coupled together through swivel arm means, the seat swivel means being coupled to the seat whilst the panel swivel means is arranged to be coupled to a panel of a motor vehicle, the seat swivel means and the panel swivel means being coupled by the swivel arm means in order to allow displacement of the seat thereabout, the assembly characterised in that the seat swivel means coupled to the seat and the panel swivel means coupled to a panel of a motor vehicle are in a configuration, both angular and spatial, to provide a stowed presentation and a deployed presentation of the assembly, the stowed presentation of the assembly being with the seat extending substantially upwards from the seat swivel means and from a side edge of that seat at a first height whilst the deployed presentation of the assembly being with the side edge at a second height, said assembly being displaceable between the deployed presentation and the stowed presentation by swivel motion about the seat swivel means and the panel swivel means through the swivel arm means therebetween.

Further features of the invention are disclosed in the dependent claims.

Normally, the seat in use will be parallel to a panel of a vehicle in its stowed presentation.

In its in use deployed presentation, the seat will be substantially perpendicular to the plane of the panel of a vehicle to which the assembly is secured.

Typically, the seat will comprise a base and a squab secured together along respective edges with a hinge in order to be foldable. This hinge may be lockable to provide, in use, a functional seat.

The seat may be coupled about the side edge to the seat swivel means by seat base hinge means.

The seat generally includes a locking mechanism to lock the seat in the deployed presentation or the stowed presentation. The locking mechanism may act through the seat swivel means or the panel swivel means. Alternatively, but normally additionally, the locking means may include a latch mechanism between the seat and a motor vehicle in which the seat assembly is secured.

Normally, the swivel arm means will be L-shaped.

The mounting means typically comprises, at least, two distinct sets or pairs of a seat swivel component and a panel swivel component coupled together through a respective swivel arm.

The present invention also includes a vehicle including a seat assembly as described above. Typically, a panel of the vehicle to which the assembly is secured will be recessed between a vehicle wheel arch and the rear doorframe of the vehicle. Thus, the seat panel in the deployed presentation will present the side edge in a plane spaced from the panel to which it is secured and to a plane of the seat in the stowed presentation.

An embodiment of the present invention will now be described, by way of example only, with reference to the accompanying drawings, in which:
Figure 1 is a schematic side elevation of a seat assembly in a stowed presentation;
Figure 2 is a schematic end elevation of the seat assembly depicted in Figure 1;
Figure 3 is a schematic side elevation of the seat assembly depicted in Figure 1 during a forward displacement stage of deployment;
Figure 4 is a schematic end elevation of the seat assembly depicted in Figure 3;
Figure 5 is a schematic side elevation of the seat assembly depicted in Figure 3 in a 'folded out' stage of deployment;
Figure 6 is a schematic end elevation of the seat assembly depicted in Figure 5;
Figure 7 is a schematic side elevation of the seat assembly in a deployed presentation;
Figure 8 is a schematic end elevation of the seat assembly depicted in Figure 7; and
Figure 9 is a schematic plane view of the seat arrangement.

The present invention, as indicated above, relates to provision of occasional third row seating within a motor vehicle. Inherently with the provision of occasional seating, it is a requirement that such seating must be stowed when not required whilst, in use, sufficiently robustly deployed to provide adequate seating for a passenger of the vehicle. Implicit in the requirement for adequate seating is that it must be safe and comfortable to that passenger. Clearly, this passenger may be an adult or a child so the seating should, if possible, be adaptable to account for these differences.

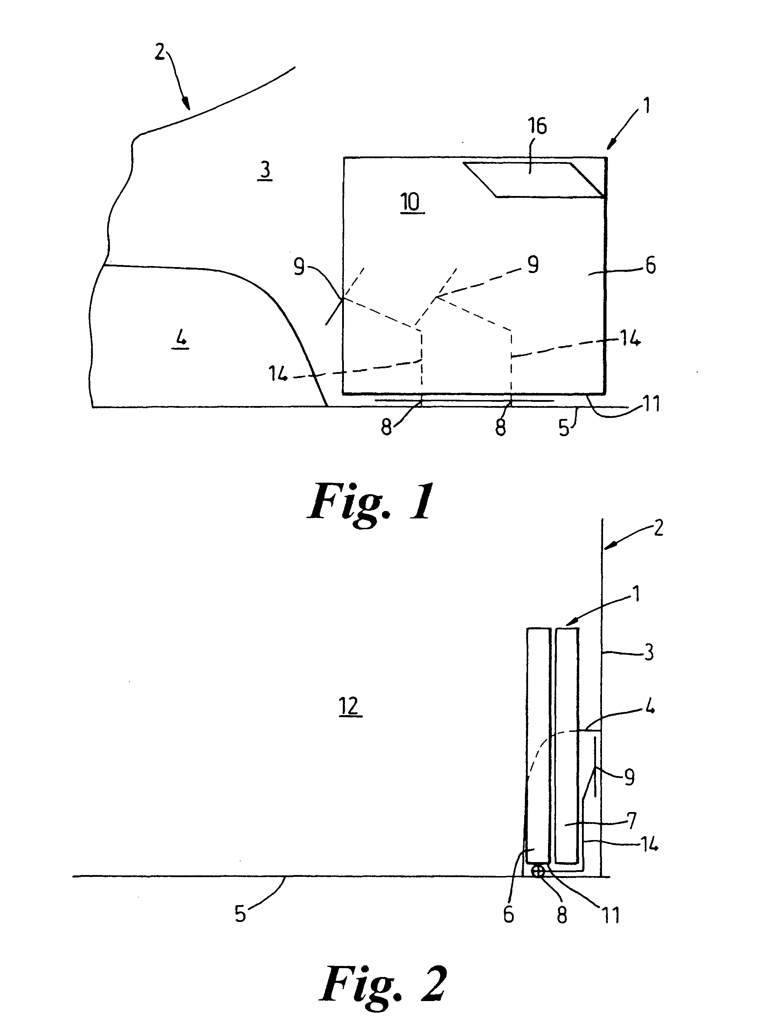

In Figures 1 and 2, a seat assembly 1 is depicted in its stowed presentation within a motor vehicle 2. This vehicle 2, in its rear luggage space 12, comprises a side panel 3 of the vehicle 2 body along with a rear wheel arch 4 extending from a luggage compartment floor 5. Thus, the seat assembly 1 is behind the wheel arch 4 but in front of the rear doorframe. This is a convenient location for least intrusion into the load carrying capacity of the luggage space 12.

The seat assembly 1 comprises a seat base 6 along with a back squab 7 suitably hinged together in order to provide a seat 10 when deployed.

The seat assembly 1 includes respective panel swivel mountings 9 and seat swivel mountings 8. These mountings 8, 9 support the seat 10 comprising the base 6 and squab 7.

In the stowed presentation depicted in Figures 1 and 2, the mountings 8, 9 in association with other locking mechanisms secure the assembly 1 in its location behind the wheel arch 4. Thus, the seat 10 extends upwardly from a side edge 11 in a normally parallel configuration with respect to the vehicle panel 3. In such circumstances, and as can be clearly seen in Figure 2, the seat assembly 1 is neatly stowed within the vehicle 2 behind the wheel arch 4 in order that the stowage space 12 is not too greatly encroached. Thus, the luggage storing capacity of the vehicle 2 in the space 12 is not significantly diminished with the seat assembly 1 in its stowed position depicted in Figures 1 and 2.

It will be appreciated that normally two seat assemblies 1 will be provided within the vehicle 2. Each assembly 1 being located behind each wheel arch 4 in order to provide occasional seating for two passengers.

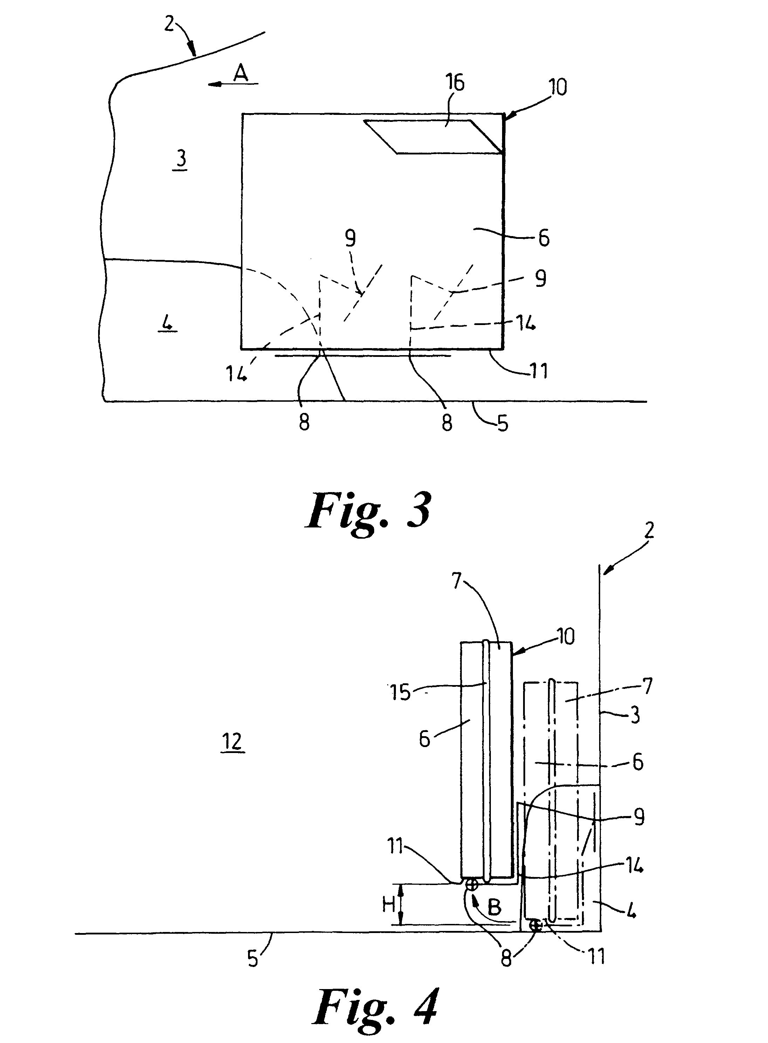

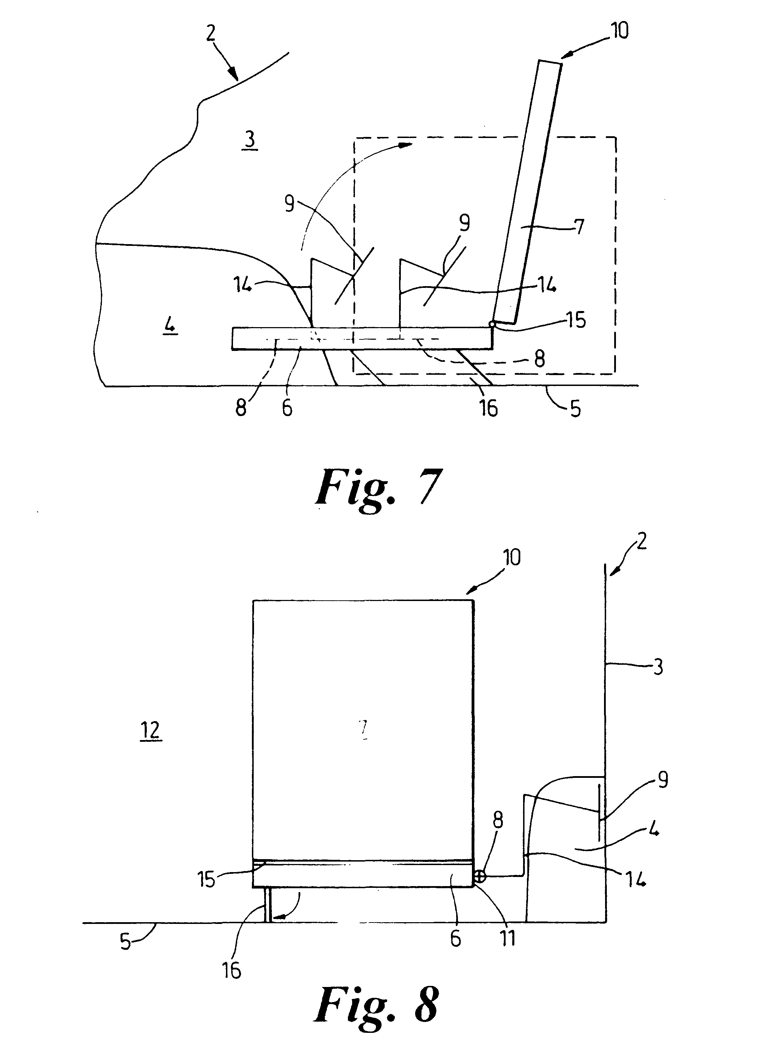

As the seat assembly 1 is displaced from its stowed position (Figures 1 and 2) to its deployed presentation (Figures 7 and 8), various stages of deployment procedure are undertaken. Thus, in Figures 3 and 4, the assembly 1 is shown in its forward displaced position or presentation. In this forward deployment stage of the seat assembly 1, the seat 10 is displaced forwards in the direction of arrowhead A (Figure 3) and inboard in the direction of arrowhead B (Figure 4). Thus, the seat 10 in this forward deployment stage is displaced both forwards and inwards in order to overlap and avoid the wheel arch 4. Furthermore, to enable a passenger to sit comfortably, the seat 10 is raised from a first height to a second height further displaced from the floor 5. Thus, there is a height difference H between the position of the side edge 11 in the stowed presentation (shown in dotted line in Figure 4) to the forward deployment stage. This height difference H provides a passenger with leg clearance. Furthermore, with the seat 10 stowed in a vertical but low position, whilst raised for actual use, it will be understood that the stowed assembly is located below a vehicle's side window line. Thus, the stowed assembly 1 does not obscure vision through that window.

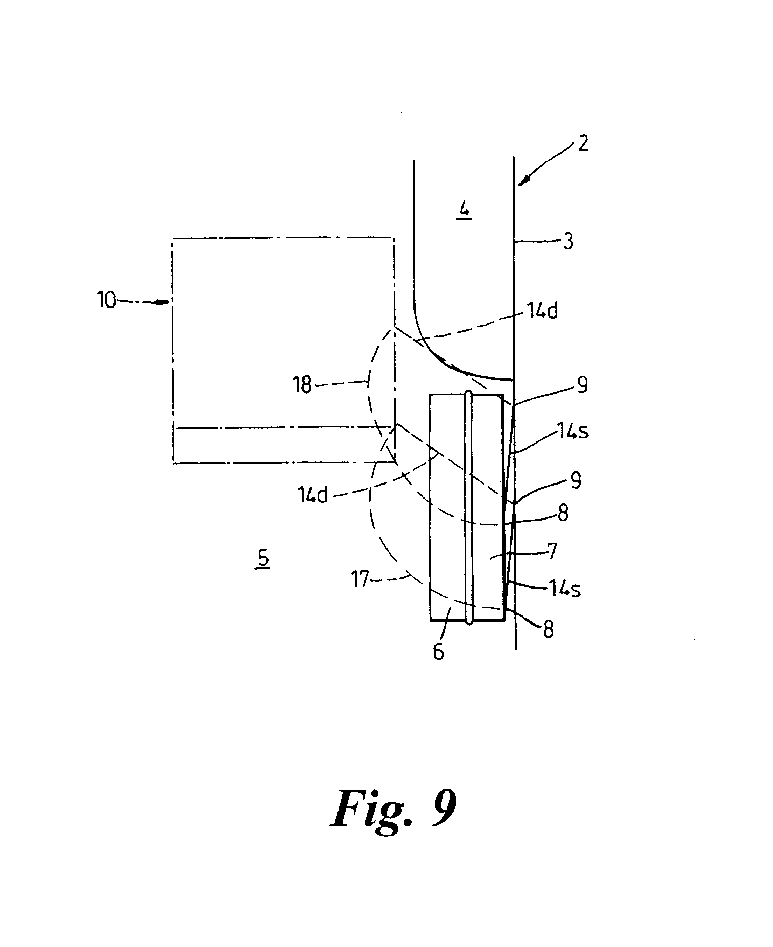

In order to achieve this forward displacement of the seat 10 comprising the base 6 and the back squab 7, the panel swivel mountings 9 are appropriately configured, both angularly and spatially. This configuration of the mountings 9 provides a desired swing arc between the stowed presentation and the forward deployed position (Figures 3 and 4). These swivel arcs between respective pairings of seat swivel mount 8 and panel swivel mount 9 are defined through a respective swivel arm 14. It will be understood that, the length and shape of each swivel arm 14 between respective pairs of seat swivel 8 and panel swivel 9 may be different. Such differences are due to the necessity of different swing arcs to the forward deployed stage (Figures 3 and 4). Clearer understanding of the differences between these swivel arcs or pathways is shown in Figure 9 described below. However, it will be appreciated that, the presentation angle of each panel swivel mount 9 to the floor 5 will substantially determine the height displacement H between the stowed presentation and the forward deployed position. This presentation angle is compounded by the arm 14 length and shape. Finally, it will understood that respective spacing of the panel swivel mounts 9 will determine the degree of robustness of the seat 10 when deployed under passenger load. Clearly, close spacing will potentially lead to wobbly presentation due to a narrow load coupling base or band to the panel 3.

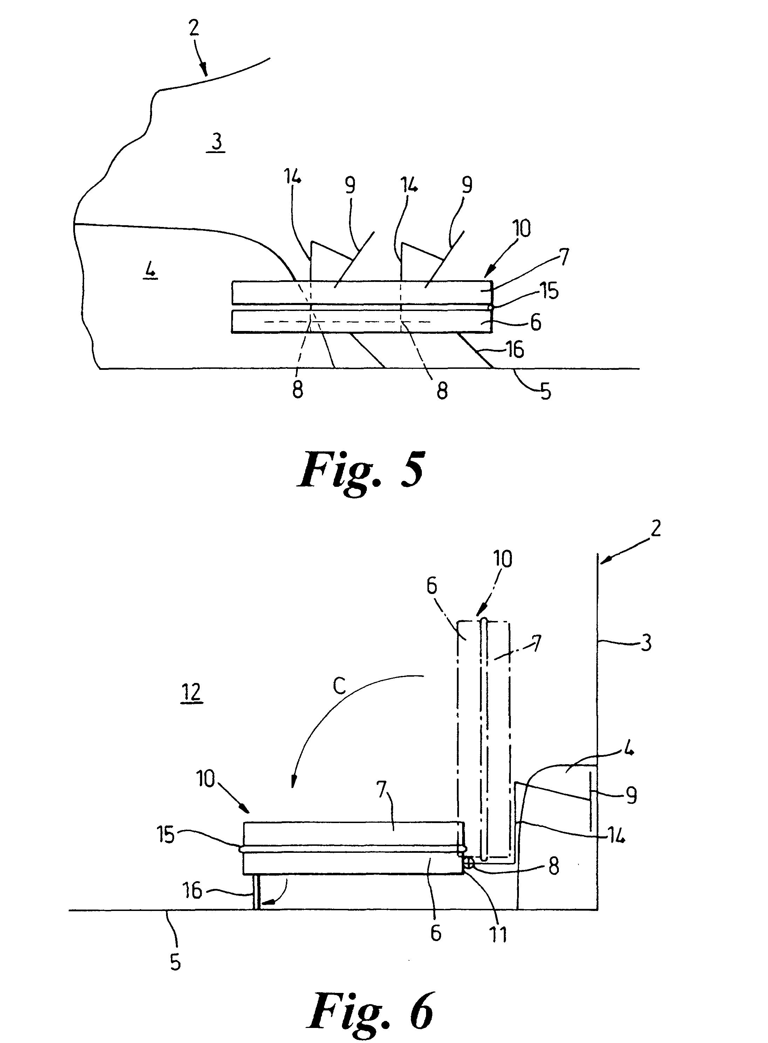

Once in the forward deployed position (Figures 3 and 4), it is necessary to then release the seat 10 comprising base 6 and back squab 7 into a functional seat configuration. Normally, the base 6 and the back squab 7 will be secured together through a hinge 15. Thus, as depicted in Figures 5 and 6, the base 6 and back squab 7, in a still 'folded-up' state, are released from their upright configuration. The released seat 10 can then pivot about each seat swivel mounting 8 adjacent the side edge 11. Thus, the seat 10 comprising base 6 and squab 7 moves to 'fold-out' in the direction of arrow head C until it is substantially parallel with the floor 5. In order to secure the seat 10 in this parallel position, a latch 16 is released from the base 6 to engage a reciprocal locking feature (not shown) in the floor 5. In such circumstances, it will be appreciated that the latch 16 in addition to locking the seat 10 also provides inboard support for that seat 10. Such inboard support in association with the swivel mountings 8, 9 and the swivel arms 14 ensure a sufficiently robust seat base 6 is provided for a vehicle passenger load.

In order to complete presentation of a functional seat for a vehicle passenger, it is necessary to unfold the back squab 7 from the base 6. Thus, as depicted in Figures 7 and 8, the seat 10 is displaced into its deployed presentation. Thus, the back squab 7 is lifted about the hinge 15 to the configuration shown in Figures 7 and 8. In this deployed presentation, the base 6 and the squab 7 are secured through an appropriate locking mechanism (not shown). In order to appreciate the profile displacement between the stowed presentation and the deployed presentation depicted in Figure 7, the stowed presentation profile envelope is depicted in broken line. Thus, although there is still some luggage storing capacity behind the squab 7, the seat 10 has occupied a significant proportion of the luggage space 12 (Figure 8). In such circumstances, and assuming two seat assemblies 1 are incorporated in a vehicle, it will be appreciated that a significant proportion of the luggage space 12 has been sacrificed in return for provision of additional, third row seating. However, this seating can be stowed away by reversal of the above stages in order to retrieve, when required, most of that luggage space 12.

As indicated above, the swing arc of the respective swing arms 14 will generally be different between respective combinations of seat swivel mounting 8, swivel arm 14 and panel swivel mounting 9. Such differences in the swivel arc can be due to the necessities of mountings 8,9 upon the seat 10 and the panel 3. Figure 9 illustrates, in plan view, displacement from a stowed presentation (solid line) to a deployed presentation (broken line). Thus, the locations of swivel arms 14 in a stowed state are given by numerals 14s whilst in a deployed state by numerals 14d. The swivel arc for each swivel arm 14 is shown through intermittent broken lines 17, 18. As can be seen, there is only a marginal difference between these swing arcs 17, 18. However, it will be appreciated that such arcs 17,18 are determined by their initial stowed presentation and their final deployed presentation. The arcs 17,18 are determined by constraints within the vehicle such as location of sufficiently robust mountings within the panel 2 and the base 6 in order to provide an adequate seat. Variations in these mounting positions and configurations will radically change the swing arcs 17, 18. In such circumstances, consideration must be given upon installation of a present seat assembly to avoid component-to-component and component-to-vehicle structure collision during deployment Such avoidance is achieved by appropriate configuration of mountings 8,9 and swivel arm 14 lengths along with seat base 6 and squab 7 dimensions with reference to vehicle size.

Those skilled in the art will appreciate that the angle of presentation of the panel swivel mountings 9 will generally determine the height differential H (Figure 4) in association with the length of the swivel arms 14. These components determine the swivel arcs 17,18 in terms of angle and range of rotation. Furthermore, a combination of differentials between the angle of presentation of each panel swivel mounting 9 and differences in swivel arm 14 length will allow bespoke, required presentation of the seat 10. Thus, a passenger of a motor vehicle 2 or that vehicle's designer, may alter or choose different angular and spatial presentations of each panel swivel mount 9 and swivel arm 14 length. Such parameters may be fixed during vehicle manufacture or provision provided within each swivel mounting 9 or arm 14 for adjustment in use. For example, the angle of presentation of the panel swivel mounting 9 may be adjusted to achieve greater height difference H between the seat 10 in the stowed presentation and in the deployed presentation. Furthermore, the effective length of the swivel arm 14, between the panel swivel mounting 9 and the seat swivel mounting 8, may be adjusted axially through a screw thread or similar displacement of interlocking components.

Each panel swivel mounting 9 may be adjusted for angular presentation and/or relative spatial position. These adjustments may be through mountings in appropriate slide rails with ratchet or similar interference engagement to present and retain the panel swivel mounting 9 as required. Through such adjustment, as indicated above, the seat 10 can be presented in a fashion more acceptable to a vehicle passenger. In such circumstances, it is possible to differentiate between a child and an adult passenger. Furthermore, it will also be appreciated that each swivel arm 14 can be releasable, from either the panel swivel mounting 9 or together with that panel swivel mounting 9 from the vehicle panel 3. Clearly, once released it is possible to remove the seat assembly 1 from the vehicle 2 and so increase the available luggage space 12.

Typically, and as depicted in the drawings, the swivel arm 14 will have an L-shaped section into which the seat 10 is hinged. The effect of such an L-shaped section is to provide, on release of seat 10 into its unfolded stage (Figures 5 and 6), further inward displacement away from the panel 3 and the wheel arch 4. Thus, the seat 10, and in particular the side edge 11, is deployed into a geometric plane further spaced from the plane of the panel 3 but normally parallel thereto. Such further displacement will reduce possible obstruction and interference between the seat assembly 1 and the wheel arch 4 during deployment.

The swivel mountings 8, 9 can take the form of hinges or bush type pivots. These swivel mountings 8, 9 may have a low friction surface to facilitate swivel thereabout. Furthermore, these swivel mountings 8, 9 may be lockable in certain swivel orientations consistent with the stowed presentation and the deployed presentation. Such locking may be through locking pin engagement when such orientations are achieved.

It may be desirable to add forward bias to the arms 14 by means of a spring or gas strut. Such forward bias will aid lifting the seat assembly 1 and push it firmly against a stop member when deployed. This will more positively line up the assembly 1 with any latch fixing in the floor 5. Prevention of inadvertent deployment could be through an extra latch mechanism. However, alternatively, a detent arrangement in the arms 14 could be used to prevent inadvertent deployment. It will also be understood that the geometry of the bias means may provide that an overcentre action is required for deployment.

It will be appreciated that, the height variation H upon displacement between the stowed and the deployed presentation may be positive or negative dependent upon the requirements of the vehicle passenger and/or designer. Furthermore, although described with regard to a seat assembly, it will be appreciated that the seat assembly may be adapted to form a work surface or table within the vehicle.

As indicated above, typically two seat assemblies will be included in the rear luggage space of a vehicle. Thus, it will be appreciated that any gap between these two seat assemblies could be supplemented with an insert section. By such means, it is possible to achieve a substantive bench seat comprising the insert and the two seat assemblies either side. However, appropriate additional support may then be required to reinforce the seat and, in particular, the insert section under passenger body weight. This insert section may be achieved by extension members within respective seat base(s) or seat squab(s) arranged to extend across the gap.

It will be appreciated that two combinations of a panel swivel mounting 9, a seat swivel mounting 8 and a swivel arm 14 are generally utilised in order to achieve acceptable stability for the assembly 1. However, alternatively, more combinations could be used or the swivel mounting area could be forked to spread mounting contact to achieve such stability.

For illustration only, the seat assembly may be typically 500 mm wide by 400 mm high as viewed in the stowed position. However, these dimensions may be extendible for comfort and safety through elongation or extension elements nested within the seat 10. Furthermore, the swivel mounting pivots 8, 9 may be 300 mm apart with swivel arms 14 lengths in the order of 300 mm. In such circumstances, the angular range of swivel may be 130° or so in order to provide an inboard displacement away from the vehicle panel 3 of 200 mm. Such inboard displacement should be adequate to avoid a wheel arch in a typical 4x4 vehicle. The seat base 6 generally may be 400 mm forward in the deployed presentation compared to the stowed presentation in order to provide some luggage space retention and possibly a rear collision crush space.

The swivel arms 14 will normally be biased using a spring against a stop structure to facilitate latch line up with a staple or other latch mechanism in the floor 5. In order to provide the seat base elevation height variation H, the swivel mounting pivots 9 will typically have an angle of 35° to the vertical to achieve a height variation H of 150 mm or so after rotation through the swivel arcs 17,18.

It will be appreciated that actual dimensions for the seat assembly will be determined to a significant extent by particular vehicle architecture and packaging.

## Claims

1. A seat assembly (1) for attachment to a motor vehicle (2), the assembly (1) comprising a seat (10) having a base (6) and a back squab (7) hinged together to form a foldable arrangement secured to the motor vehicle (2) by mounting means comprising a swivel arm means (14), connected at one end to the seat (10) by seat swivel means (8) and at the other end to a side panel (3) of the motor vehicle (2) by panel swivel means (9), **characterised in that** the mounting means is arranged to facilitate movement of the seat (10) between a stowed and a deployed position such that a side edge (11) of the seat (10), from which side edge (11) the seat (10) extends substantially upwards when in the stowed position, is at a first height when in the deployed position and at a second lower height when in the stowed position, the seat (10) being displaceable between the deployed and stowed positions by swivel motion about said seat swivel means (8) and said panel swivel means (9) through the swivel arm means (14) therebetween.

2. An assembly (1) as claimed in Claim 1 wherein both the base (6) and the back squab (7) in the stowed position extend substantially upwardly so as to lie substantially parallel to the side panel (3) of the motor vehicle (2).

3. An assembly (1) as claimed in Claim 1 or in Claim 2 in which, when the seat (10) is in a deployed position, both the base (6) and the back squab (7) extend substantially perpendicular to the side panel (3) of the motor vehicle (2) to which the seat assembly (1) is secured.

4. An assembly (1) as claimed in any preceding claim, wherein the seat (10) is coupled about the side edge (11) to the seat swivel means (8) in order to allow rotational displacement thereabout.

5. An assembly (1) as claimed in any preceding claim, wherein the seat (10) includes locking means to lock the seat (10) in the deployed position, the locking means including a latch mechanism (16) secured to the seat (10) for engagement with a floor (5) of the motor vehicle (2) to which the seat assembly (1) is secured.

6. An assembly (1) as claimed in any preceding claim, wherein the swivel arm means (14) is adjustable to allow adjustment of the effective length of the swivel arm means (14) between said seat swivel means (8) and said panel swivel means (9).

7. An assembly (1) as claimed in any preceding claim, wherein the panel swivel means (9) is adjustable in order to vary the angular relationship of the panel swivel means (9) to the seat (10).

8. A motor vehicle (2) including a seat assembly (1) as claimed in any preceding claim.

9. A vehicle (2) as claimed in Claim 8, wherein the assembly (1) is secured to a panel (3) located in a recessed position behind a wheel arch (4) of the vehicle (1) in a luggage space (12) thereof, the assembly (2) being secured within the vehicle (2) such that the deployed presentation of the assembly (1) presents the side edge (11) in a plane spaced from, but parallel to, the panel (3) and to a plane of the seat (10) with the assembly (1) in its stowed presentation.

10. A vehicle (2) as claimed in Claim 8 or Claim 9, wherein the vehicle (2) includes two seat assemblies (1) secured to opposed panels within the vehicle (2) and such that an insert can be secured between these two seat assemblies (1) in their deployed presentation in order to augment such assemblies (1) to form a substantive bench seat across the width of the vehicle (2).

## Patentansprüche

1. Sitzbaugruppe (1) zur Befestigung an einem Kraftfahrzeug (2), wobei die Baugruppe (1) folgendes umfaßt: einen Sitz (10) mit einer Basis (6) und einer Rückenlehne (7), die aneinander angelenkt sind und eine faltbare Anordnung bilden, die an dem Kraftfahrzeug (2) durch ein Befestigungsmittel befestigt ist, das ein Schwenkarmmittel (14) umfaßt, das an einem Ende durch ein Sitzschwenkmittel (8) mit dem Sitz (10) und an dem anderen Ende durch ein Verkleidungsschwenkmittel (9) mit einer Seitenverkleidung (3) des Kraftfahrzeugs (2) verbunden ist, **dadurch gekennzeichnet, daß** das in der entfalteten Position auf einer ersten Höhe und in der verstauten Position auf einer zweiten, niedrigeren Höhe befindet, wobei der Sitz (10) durch eine Schwenkbewegung um das Sitzschwenkmittel (8) und das Verkleidungsschwenkmittel (9) durch das Schwenkarmmittel (14) dazwischen zwischen der entfalteten und der verstauten Position verschoben werden kann.

2. Baugruppe (1) nach Anspruch 1, wobei sowohl die Basis (6) als auch die Rückenlehne (7) sich in der verstauten Position im wesentlichen aufwärts erstrecken und im wesentlichen parallel zur Seitenverkleidung (3) des Kraftfahrzeugs (2) liegen.

3. Baugruppe (1) nach Anspruch 1 oder 2, bei der, wenn sich der Sitz (10) in einer entfalteten Position befindet, sich sowohl die Basis (6) als auch die Rückenlehne (7) im wesentlichen senkrecht zur Seitenverkleidung (3) des Kraftfahrzeugs (2) erstrecken, an der die Sitzbaugruppe (1) befestigt

4. Baugruppe (1) nach einem der vorhergehenden Ansprüche, wobei der Sitz (10) an der Seitenkante (11) an das Sitzschwenkmittel (8) gekoppelt ist, um eine Drehverschiebung dort herum zu gestatten.

5. Baugruppe (1) nach einem der vorhergehenden Ansprüche, wobei der Sitz (10) ein Verriegelungsmittel zum Verriegeln des Sitzes (10) in der entfalteten Position enthält, wobei das Verriegelungsmittel einen am Sitz (10) befestigten Rastmechanismus (16) enthält zur Eingriffnahme mit einem Boden (5) des Kraftfahrzeugs (2), an dem die Sitzbaugruppe (1) befestigt ist.

6. Baugruppe (1) nach einem der vorhergehenden Ansprüche, wobei das Schwenkarmmittel (14) eingestellt werden kann, um eine Einstellung der effektiven Länge des Schwenkarmmittels (14) zwischen dem Sitzschwenkmittel (8) und dem Verkleidungsschwenkmittel (9) zu gestatten.

7. Baugruppe (1) nach einem der vorhergehenden Ansprüche, wobei das Verkleidungsschwenkmittel (9) eingestellt werden kann, um die Winkelbeziehung des Verkleidungsschwenkmittels (9) zum Sitz (10) zu variieren.

8. Kraftfahrzeug (2) mit einer Sitzbaugruppe (1) nach einem der vorhergehenden Ansprüche.

9. Fahrzeug (2) nach Anspruch 8, wobei die Baugruppe (1) an einer Verkleidung (3) befestigt ist, die sich in einer vertieften Position hinter einem Radkasten (4) des Fahrzeugs (1) in seinem Kofferraum (12) befindet, wobei die Baugruppe (1) derart im Fahrzeug (2) befestigt ist, daß die entfaltete Präsentation der Baugruppe (1) die Seitenkante (11) in einer Ebene darstellt, die von der Verkleidung (3) beabstandet ist, aber parallel dazu und zu einer Ebene des Sitzes (10) verläuft, wobei sich die Baugruppe (1) in ihrer verstauten Präsentation befindet.

10. Fahrzeug (2) nach Anspruch 8 oder 9, wobei das Fahrzeug (2) zwei Sitzbaugruppen (1) enthält, die an gegenüberliegenden Verkleidungen im Fahrzeug (2) befestigt sind, derart, daß ein Einsatz zwischen diesen beiden Sitzbaugruppen (1) in ihrer entfalteten Präsentation befestigt werden kann, um derartige Baugruppen (1) zu vergrößern und einen wesentlichen Banksitz über die Breite des Fahrzeugs (2) hinweg zu bilden.

## Revendications

1. Ensemble de siège (1) destiné au montage dans un véhicule à moteur (2), l'ensemble (1) comprenant un siège (10) ayant une base (6) et un coussin de dossier (7) articulés l'un à l'autre sur charnières pour former un agencement pliable fixé au véhicule à moteur (2) par des moyens de montage comprenant un moyen de bras de pivotement (14), connecté à une extrémité au siège (10) par l'intermédiaire d'un moyen de pivotement de siège (8) et à l'autre extrémité à un panneau latéral (3) du véhicule à moteur (2) par l'intermédiaire d'un moyen de pivotement de panneau (9), **caractérisé en ce que** le moyen de montage est agencé pour faciliter le mouvement du siège (10) entre une position escamotée et une position déployée de telle façon qu'un bord latéral (11) du siège (10), duquel bord latéral (11) le siège (10) s'étend sensiblement vers le haut quand il est dans la position escamotée, est à une première hauteur quand il est à la position déployée et à une deuxième hauteur plus basse quand il est à la position escamotée, le siège (10) pouvant être déplacé entre les positions déployée et escamotée par un mouvement de pivotement autour dudit moyen de pivotement de siège (8) et dudit moyen de pivotement de panneau (9), par l'intermédiaire du moyen de bras de pivotement (14) prévu entre ceux-ci.

2. Ensemble (1) selon la revendication 1 dans lequel la base (6) et le coussin de dossier (7) en position escamotée s'étendent sensiblement vers le haut de façon à être couchés de manière sensiblement parallèle au panneau latéral (3) du véhicule à moteur (2).

3. Ensemble (1) selon la revendication 1 ou la revendication 2 dans lequel, quand le siège (10) est en position déployée, la base (6) et le coussin de dossier (7) s'étendent sensiblement de façon perpendiculaire au panneau latéral (3) du véhicule à moteur (2) dans lequel l'ensemble de siège (1) est monté.

4. Ensemble (1) selon l'une quelconque des revendications précédentes, dans lequel le siège (10) est accouplé au niveau du bord latéral (11) au moyen de pivotement de siège (8) afin de permettre le déplacement rotatif autour de ce point.

5. Ensemble (1) selon l'une quelconque des revendications précédentes, dans lequel le siège (10) comprend un moyen de verrouillage pour verrouiller le siège (10) à la position déployée, le moyen de verrouillage comprenant un mécanisme de loquet (16) fixé au siège (10) destiné à l'engagement dans un plancher (5) du véhicule à moteur (2) dans lequel l'ensemble de siège (1) est monté.

6. Ensemble (1) selon l'une quelconque des revendications précédentes, dans lequel le moyen de bras de pivotement (14) est réglable pour permettre le réglage de la longueur réelle du moyen de bras de pivotement (14) entre ledit moyen de pivotement de siège (8) et ledit moyen de pivotement de panneau (9).

7. Ensemble (1) selon l'une quelconque des revendications précédentes, dans lequel le moyen de pivotement de panneau (9) est réglable dans le but de faire varier la relation angulaire du moyen de pivotement de panneau (9) par rapport au siège (10).

8. Véhicule à moteur (2) comportant un ensemble de siège (1) selon l'une quelconque des revendications précédentes.

9. Véhicule (2) selon la revendication 8 dans lequel l'ensemble (1) est fixé à un panneau (3) situé dans une position de découpe en retrait, derrière un passage de roue (4) du véhicule (1), dans un espace de rangement de bagages (12) de celui-ci, l'ensemble (2) étant fixé dans le véhicule (2) de telle manière que la présentation déployée de l'ensemble (1) présente le bord latéral (11) dans un plan séparé du, mais parallèle au panneau (3) et à un plan du siège (10) avec l'ensemble (1) dans sa présentation escamotée.

10. Véhicule (2) selon la revendication 8 ou la revendication 9, dans lequel le véhicule (2) comporte deux ensembles de siège (1) fixés à des panneaux opposés dans le véhicule (2) et agencés de telle manière qu'une section en insert soit fixée entre ces deux ensembles de siège (1) dans leur présentation déployée, afin d'augmenter la capacité de ces ensembles (1) pour former une banquette de siège substantive s'étendant à travers la largeur du véhicule (2).
